Europäisches Patentamt

European Patent Office

Office européen des brevets

(11) Publication number: **0 261 765**
A2

# EUROPEAN PATENT APPLICATION

(21) Application number: 87306064.4

(51) Int. Cl.⁴: **G05B 21/00**

(22) Date of filing: 09.07.87

(30) Priority: 24.09.86 US 911278

(43) Date of publication of application:
30.03.88 Bulletin 88/13

(84) Designated Contracting States:
DE ES FR GB IT SE

(71) Applicant: THE BABCOCK & WILCOX
COMPANY
1010 Common Street P.O. Box 60035
New Orleans Louisiana 70160(US)

(72) Inventor: Cygnarowicz, Robert M.
295 Macon Lane
Rochester New York 14650(US)
Inventor: Lazar, Arthur John
6331 Ramblewood Drive
Mentor Ohio 44060(US)
Inventor: Patella, Joseph Gabriel
10217 Hoos Road
Mentor Ohio 44060(US)

(74) Representative: Cotter, Ivan John et al
D. YOUNG & CO. 10 Staple Inn
London WC1V 7RD(GB)

(54) Updating physical property correlations.

(57) In a control logic system (10) for updating physical property correlations, the difference between a calculated value (14) of a physical property and a laboratory value (12) of the physical property is determined (16) and combined (20) with a previously determined value (28) of the difference to obtain a new value of the correlation bias. Actuation of remote switches (30, 32) by a system operator allows this new value or correlation bias to pass through the control system and be "set" until an updated correlation bias is desired by the operator.

EP 0 261 765 A2

## UPDATING PHYSICAL PROPERTY CORRELATIONS

This invention relates to updating physical property correlations that may be used, for example, for process control.

Correlations are often used in process control system to determine the value of a physical property. Typically, the correlation is periodically updated from the results of laboratory analysis by utilising a bias. The conventional updating procedure required calculating the result of the correlation and the current bias, recording the foregoing result, measuring the physical property by laboratory means, calculating a new bias by subtracting the laboratory measurement from the previously recorded calculated result of the correlation, and then tuning the new correlation bias. Thus, the foregoing process involves a number of steps all of which can introduce and/or increase an error in the resulting correlation bias.

According to the invention there is provided a system for updating physical property correlations with laboratory data, the system comprising means for entering a measured value of a physical property into the system, means for entering a calculated value of the physical property into the system, means for determining the difference between the measured value and the calculated value of the physical property, and means for combining the difference with a previously determined difference for the physical property to produce a new bias for correlations of the physical property.

The present invention solves or at least alleviates the aforementioned problems associated with the prior art by providing a system for continuously updating the correlation bias utilised to determine the value of a physical property, for example in a process control system. The system determines the difference between the calculated value of a physical property and the laboratory value of the property and "sums" the difference with the previous value of correlation bias to obtain a new value of correlation bias.

In a preferred form of the system, the new value of correlation bias can pass through the control system only after the operator has actuated a plurality of remote switches to ensure that faulty data is not accidentally entered into the system. Upon actuation of the remote switches, the new bias is allowed to pass through the control system and is "set" until the remote switches are again actuated. A reset procedure is inherent in the system, thus resetting the remote switches for future actuation by the operator. In this manner, correlation bias can be easily "updated" when desired by the system operator.

The preferred system (hereinafter also referred to as "the control logic system") eliminates the need for recording the correlation bias so that this bias can be subtracted from the measured value of the physical property being monitored. The control logic can continuously update the correlation bias and is an integral part of the overall (process) control system.

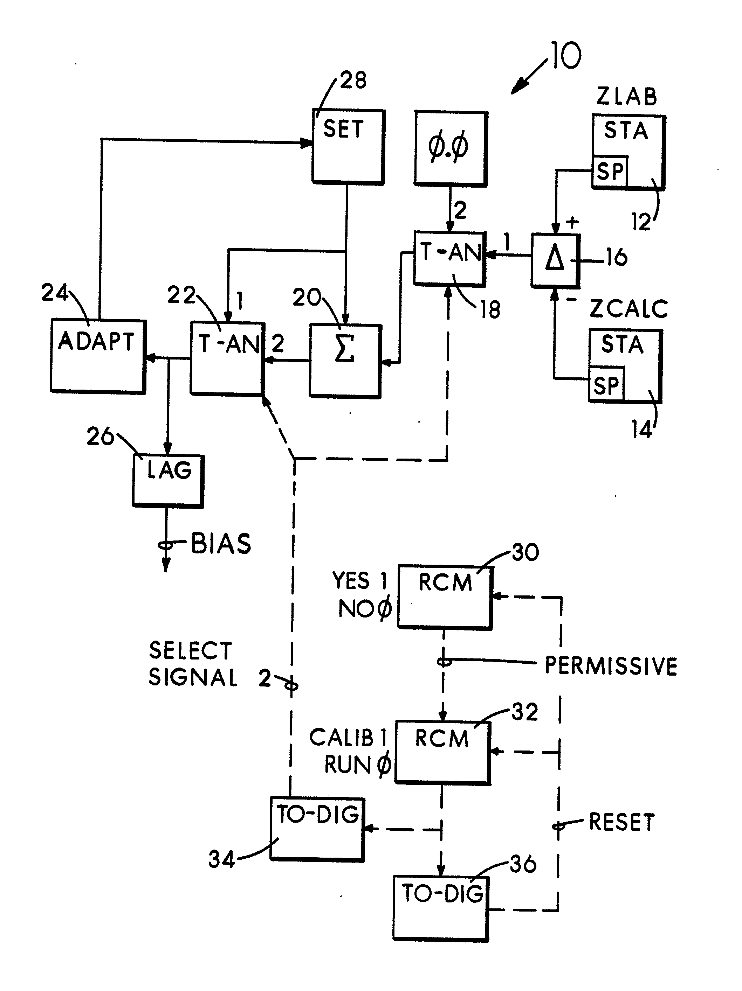

The invention will now be further described, by way of illustrative and non-limiting example, with reference to the accompanying drawing, the single figure of which is a schematic diagram representing a preferred control logic system embodying the present invention.

The sole drawing figure is a schematic diagram of a logic control system 10 for updating physical property correlations with laboratory data. In the control logic system 10, a laboratory value for a process variable and a corresponding calculated value for this variable are entered into remote stations 12 and 14, respectively. Outputs of the remote stations 12 and 14 are applied to positive and negative inputs, respectively, to a difference unit 16 having an output connected an input #1 to an analog transfer station 18. An output of the analog transfer station 18 is connected to an input to a summation unit 20 which has an output connected to a #2 input to an analog transfer station 22. An output of the transfer station 22 is connected to an adapt unit 24 and to a lag unit 26. An output of the adapt unit 24 is connected to a set unit 28 which has an output connected to an input to the summation unit 20 and to a #1 input to the transfer station 22.

A remote switch 30, which is used by a system operator to execute an update, is connected to another remote switch 32 that actually executes the update, as hereinafter described. An output of the remote switch 32 is connected to inputs to digital transfer stations 34 and 36. An output of the digital transfer station 34 is used to control the operation of the analog transfer stations 18 and 22, as hereinafter described. An output of the digital transfer station 36 is connected to an input to the remote switch 30 and provides a reset function for the remote switch 30.

Operationally, the system operator enters the laboratory value of the physical property being measured and the corresponding calculated value of the property into the remote stations 12 and 14, respectively. The foregoing values are transmitted to the difference unit 16 which performs a difference calculation and produces an output which is transmitted to the summation unit 20 via the analog transfer station 18. The summation unit 20 sums the "difference" determined by the difference unit 16 with the "old" value of a bias presented by the set unit 28 to the summation unit 20 to obtain a "new" bias for the system. This new or updated bias is not transmitted to the output of the system 10 until the operator initiates the update procedure, ensuring that faulty data is not accidentally entered into the system.

The update procedure involves actuation of the remote switches 30 and 32. When an update in the bias is desired, the operator actuates the remote switch 30, and then subsequently actuates the remote switch 32. Actuation of the remote switch 32 generates a digital "1" which is converted into a pulse by the digital transfer station 34 and transmitted to the transfer stations 22 and 18. The application of this pulse to the transfer station 22 causes this station to permit the new value of bias to be transmitted therethrough to the system via the lag unit 26 and sets the new value of the bias presented to the summation unit 20 by the set unit 28. Similarly, the application of this pulse from the transfer station 34 to the transfer station 18 causes the station 18 to pass an analog zero to the summation unit 20 which is summed with the updated bias.

After the updating process has been completed, the output of the transfer station 34 returns to a digital zero which reselects the #1 inputs to the transfer stations 18 and 22, causing the updated bias level to be "locked" into the system. The transfer station 36 performs a timing operation and, after a predetermined period of time has elapsed, this transfer station causes the remote switches 30 and 32 to be reset for future actuation when updating is desired. The lag unit 26 is a real-time lag function that dampens the change in bias so that such a change can be gradual so as not drastically to affect the system being controlled.

The foregoing method of updating physical property correlations used for process control can be used whenever the form of the correlation is:

$z = f(x,y,...) + BIAS$

where $z$ = a physical property of interest;

$x,y,...$ = variables on which the physical property depends; and

BIAS = correlational bias

For example, the foregoing approach can be used for continuous on-line process weight (stock balancing). By this approach, the physical property of interest can be monitored and continuously updated. For example, pressure, temperature and specific gravity can be corrected automatically, continuously and accurately without labour intensive data collection as required in the prior art. Thus, continuous on-line weight balancing can be easily achieved by utilisation of the above-described method.

## Claims

1. A system for updating physical property correlations with laboratory data, the system (10) comprising means (12) for entering a measured value of a physical property into the system, means (14) for entering a calculated value of the physical property into the system, means (16) for determining the difference between the measured value and the calculated value of the physical property, and means (20) for combining the difference with a previously determined difference for the physical property to produce a new bias for correlations of the physical property.

2. A system according to claim 1, including means (32) for permitting the new bias to be transmitted through the system, the permitting means (32) being actuatable by an operator of the system.

3. A system according to claim 2, wherein the permitting means (32) comprises at least one switch means.

4. A system according to claim 2 or claim 3, including means (36) for resetting the permitting means (32) after the new bias has been transmitted through the system.

5. A system according to claim 2, claim 3 or claim 4, including means (28) for preserving the new bias within the system until another bias is subsequently determined and the permitting means (32) is actuated by the operator of the system.

6. A system according to any one of the preceding claims, including means (26) for damping the new bias prior to the new bias being transmitted through the system.